# EUROPEAN PATENT SPECIFICATION

(11) **EP 3 628 147 B1**
(45) Date of publication and mention of the grant of the patent: **30.06.2021**
(21) Application number: 18197305.8
(22) Date of filing: 27.09.2018
(51) Int. Cl.: A01K 1/01, B65G 15/60

(54) **MANURE REMOVAL AND DISCHARGING SYSTEM**
DUNGENTNAHME- UND -ABGABESYSTEM
SYSTÈME D'ENLÈVEMENT ET DE DÉCHARGE DE FUMIER

(43) Date of publication of application: 01.04.2020
(73) Proprietor: Hedensted Gruppen A/S, 8722 Hedensted (DK)
(72) Inventor: Christiansen, Kim, 5464 Brenderup (DK); Lange, Kent, 8763 Rask Mølle (DK); Madsen, Jens Jørgen, 5220 Odense SØ (DK)
(74) Representative: COPA Copenhagen Patents

(56) References cited:
- EP-A1- 2 839 737
- DE-A1- 3 528 604
- FR-A- 1 524 060
- NL-A- 8 502 311
- SU-A1- 1 279 919

## Description

### TECHNICAL FIELD

The present invention relates to a system for removal and discharging of mink manure from mink in mink cages arranged in a mink shed.

### BACKGROUND OF THE INVENTION

The current systems used for automatic manure handling comprise a gutter placed under the mink cages to collect manure. The manure is removed from the gutter either with a scraper which is pulled along the gutter with wires or with a driver robot that drives back and forth in the gutter. However, the current systems require maintenance and cleaning. Especially manual labour should be minimized due to hygienic, ergonomic and safety reasons.

### SUMMARY OF THE INVENTION

The object of the present invention is to provide a more efficient manure removal system requiring less maintenance than the above known systems. It is an object of the present disclosure to provide a manure removal and discharging system which can be readily implemented into existing mink sheds. In particular, it is an object of the present disclosure to provide a low-cost system which can be adapted to the existing structural features of the mink sheds.

The above object is obtained by a manure removal and discharging system according to claim 1, for removal of manure from minks in mink cages arranged in a mink shed. The cages being wire mesh cages having a wire mesh bottom and being arranged in longitudinally extending long rows of wire mesh cages being suspended in posts of the mink shed or arranged in cage consoles. The system comprises a belt conveyor. The belt conveyor comprises a first station located at a first system end and a second station located at an opposite second system end longitudinally spaced from the first station. The first station comprises a first roller, and the second station comprises a second roller. At least one of the rollers is a drive roller.

The system comprises an endless conveyor belt configured for extending in a longitudinal direction below at least a portion of the bottoms of the cages of the longitudinally extending row of cages and around the first and second roller. The conveyor belt comprises an upper belt portion configured for receiving manure from the minks in the cages. The conveyor belt comprises a lower conveyor belt portion.

The system comprises a number of wires. The wires extend between the first and second station below the upper belt portion. The wires are configured to support the upper belt portion. The wires may be of any suitable materials, such as metal, plastic, textile or a combination thereof, i.e. not limited to metal, rendering wires of a wire-like shape.

The system comprises at least one bracket extending transversely to the longitudinal direction of the belt below the wires. The bracket comprises an upper surface configured to support the wires.

The upper surface of the bracket is provided with recesses configured to receive respective wires. The recesses are arranged to support and guide the wires so that the conveyor belt is appropriately supported to accommodate the manure dropping down thereon.

It is an advantage of the present disclosure that the system is automatic and may run continuously, thereby reducing odour emission. Furthermore, the system requires minimal maintenance and cleaning compared to the current systems. Moreover, an advantage of the system is that the belt conveyor configuration is much more low-cost in purchase compared with conveyor belts fitted with for instance transverse rollers along the longitudinal length of the belt.

NL 8 502 311 A discloses a manure removal and discharging system comprising mutually spaced brackets carrying transversely extending hollow upwardly curved guide rods supporting the respective portions of the conveyor belt. One bracket for each mink cage is disclosed. In order to prevent the belt from hanging down between the guide rods carried by the brackets, the spacing between brackets carrying the guide rods has to be short, thereby increasing the cost and complexity of the system.

SU 1 279 919 A discloses a device for supporting a conveyer belt in a place of loading lumpy mountain masses and configured to reduce dynamic loads on its elements. The device comprises flexible longitudinal and transverse ties or ropes fixed to a frame by means of shock absorbers in the form of springs. The ties or robes are at their intersection points connected by supporting elements with crossing holes for the respective ties or robes. Supporting sleeves are loosely seated on the longitudinal ties or robes between the supporting elements. Elastic spacers are mounted freely movable on the transverse ties or robes. When loading a lumpy material, the resulting dynamic loads are damped by the flexibility of the longitudinal and transverse ties or robes.

DE 3528604 A1 discloses a manure removal system for farms of small animals and comprising at least one row of cages. A trough-shaped conveying device is arranged below the cages and comprises a moisture-impermeable floor part of the trough and a moisture-permeable conveyer belt arranged above the floor part and being movable along the longitudinal axis of the trough.

Also disclosed is a bracket for supporting a conveyor belt in a manure removal and discharging system for removal of manure from minks in mink cages arranged in a mink shed. The cages being wire mesh cages having a wire mesh bottom and being arranged in longitudinally extending long rows of wire mesh cages being suspended in posts of the mink shed or arranged in cage consoles. The system comprises a belt conveyor. The belt conveyor comprises a first station located at a first system end and a second station located at an opposite second system end longitudinally spaced from the first station. The first station comprises a first roller, and the second station comprises a second roller. At least one of the rollers may be a drive roller. The system comprises an endless conveyor belt configured for extending in a longitudinal direction below at least a portion of the bottoms of the cages of the longitudinally extending row of cages and around the first and second roller. The conveyor belt comprises an upper belt portion configured for receiving manure from the minks in the cages and a lower conveyor belt portion. The system comprises a number of wires extending between the first and second station below the upper belt portion and being configured to support the upper belt portion. The bracket extends transversely to the longitudinal direction of the belt below the wires and has an upper surface configured to support the wires.

The first system end may be the first end of the longitudinal row of mink cages. The second system end may be the second end of the longitudinal row of mink cages.

Alternatively, the second system end may be located between the first and second end of the longitudinal row of mink cages, whereby a first and a second system meet between the first and the second end of the longitudinal row of mink cages.

The first roller of the system may be a drive roller. The first drive roller may be configured to drive the upper belt portion in a direction from the second roller towards the first roller. Alternatively, the second roller of the system may be a drive roller. The second drive roller may be configured to drive the upper belt portion in a direction from the first roller towards the second roller.

The system may comprise a number of wires, such as at least two wires, such as three wires, such as four wires, such as more than four wires.

The bracket may be plate-shaped and formed from sheet material, such as metal or steel sheets or plastic sheets. Alternatively, the bracket may be casted in metal or steel material or moulded in a plastic material, such as a thermoplastic material. The bracket may be formed by more than one integral parts.

The upper surface of the bracket may be provided with recesses configured to receive respective wires. The recesses are arranged to support and guide the wires so that the conveyor belt is appropriately supported to accommodate the manure dropping down thereon.

The upper surface of the bracket may have the shape of a flat U or V as seen in the longitudinal direction of the conveyor belt. Thereby, the belt will also have the U- or V-shape as seen in a cross-sectional view and accommodate the manure dropping down thereon. The upper surface of the bracket may alternatively have any other shape where the middle portion of the surface is lower than the right and/or left portion as seen in the longitudinal direction of the conveyor belt. Alternatively, the upper surface may have a flat shape, i.e. the middle portion of the surface and the right and left portions are distributed on a horizontal line.

The bracket may comprise a through-going opening defining a lower surface configured to support the lower belt portion of the conveyor belt. The through-going opening may be encircled by the bracket. Alternatively, the through-going opening may provide an opening in one of the sides of the bracket, creating a C-shaped bracket. Alternatively, the bracket may comprise an opening in the bottom.

The upper surface of the bracket may comprise an upper inclination. The upper inclination may incline upwardly in the moving direction of the upper belt portion. The lower surface of the bracket may comprise a lower inclination. The lower inclination may incline upwardly in the moving direction of the lower belt portion. Alternatively, or additionally, the direction of the upper inclination and the direction of the lower inclination are opposite.

The inclination of the upper surface and/or lower surface may be a protrusion provided on the bracket. The protrusion may extend beyond the plate shape of the bracket. The protrusion may be bent of a sheet metal material or casted in a metal or steel material. Alternatively, the protrusion may be moulded in a plastic material.

The system may comprise a plurality of brackets spaced evenly in the longitudinal direction of the belt. The brackets may be attached to the evenly spaced structural posts or consoles. The brackets may be attached to every post or console. Alternatively, the brackets may be attached to every second post or console. Alternatively, the brackets may be attached to every third post or console.

The advantage of the disclosed bracket is that the conveyor belt is supported in the longitudinal length. The wires support the upper portion of the conveyor belt and may provide a shape of a U or V, to accumulate the manure so that it does not fall out of the sides of the belt. Furthermore, the wires support the upper belt portion so that it does not hang unsupported. The through-hole of the bracket supports the lower portion of the belt so that it does not hang unsupported.

The bracket may comprise a first attachment element. The first attachment element may be configured to attach the bracket to a post. Alternatively, the first attachment element may be configured to attach the bracket to a console. The attachment element may be attached to a post or a console leg by clamping a first bar and a second bar of the first attachment element around the post or console leg. Alternatively, the first attachment element may be attached to the post or console leg by means of bolts or screws and holes in the post or console leg configured to receive the bolts. The first attachment element may be detachably attached to the bracket. Alternatively, the first attachment element may be fixed to the bracket, e.g. the first attachment element may be soldered or welded to the bracket. Alternatively, the first attachment element may be an integrated part of the console.

The bracket may comprise a second attachment element. The second attachment element may be configured to attach to a post. Alternatively, the second attachment element may be configured to attach to a console. The second attachment element may be detachably attached to the first attachment element. Alternatively, the second attachment element may be fixed to the first attachment element, e.g. the second attachment element may be soldered or welded to the first attachment element. Alternatively, the second attachment element may be an integrated part of the console.

The advantage of the attachment elements is to provide a support for the bracket. The attachment element ensures that the bracket does not rotate around the attachment point at the pole or the console due to the weight of the belt.

The first station and/or the second station may comprise a wire tensioner. The wire tensioner may comprise a ratchet or a turnbuckle, also called a stretching or straining screw.

The system may comprise a belt tensioner. The belt tensioner may comprise a turnbuckle or brackets tensioned by a bolt. The belt tensioner may comprise a spring element configured to provide a tension of the belt.

The wire tensioner and the belt tensioner may be tensioned independently from each other. The advantage of the wire and belt tensioner is that the system may be tensioned regularly, providing a more enduring system.

The system may comprise a scraper. The scraper may be located at the first station. Alternatively, the scraper may be located at the second station. The scraper may be located at the end of the conveyor belt. The scraper is configured to scrape the manure off the conveyor belt.

The system may comprise a funnel. The funnel may be located at the first station.

Alternatively, the funnel may be located at the second station. The funnel is configured to direct the manure scraped off the belt by the scraper through a drain. The funnel may comprise a one-way valve or a check valve, allowing manure to pass from above and restricts odour to pass from below.

The system may comprise a cleaning system. The cleaning system may be located at the first station and be configured to clean the lower portion of the conveyor belt. Alternatively, the cleaning system may be located at the second station.

The advantage of the scraper, funnel and cleaning pump is that the system requires minimal manual cleaning and eliminates build-up of manure in the system and thereby reduces odour emission.

The first station and/or second station may be casted into the ground, such as mounted in a concrete block.

### BRIEF DESCRIPTION OF THE FIGURES

Embodiments of the invention will be described in more detail in the following with regard to the accompanying figures. The figures show one way of implementing the present invention and are not to be construed as being limiting to other possible embodiments falling within the scope of the attached claim set.
Fig. 1 is a schematic diagram illustrating an exemplary manure removal and discharging system,
Fig. 2 is a schematic diagram illustrating an exemplary manure removal and discharging system seen from a closer view,
Fig. 3 is a schematic diagram illustrating an exemplary station of a manure removal and discharging system,
Fig. 4 is a schematic diagram illustrating an exemplary bracket in a manure removal and discharging system,
Fig. 5 is a schematic diagram illustrating an exemplary manure removal and discharging system where the mink cages are arranged in consoles,
Fig. 6 is a schematic diagram illustrating an exemplary attachment element of a bracket,
Fig. 7 is a schematic diagram illustrating an exemplary bracket,
Fig. 8 is a schematic diagram illustrating an exemplary bracket,
Fig. 9 is a schematic diagram illustrating an exemplary bracket,
Fig. 10 is a schematic diagram illustrating an exemplary station of a manure removal and discharging system,
Fig. 11 is a schematic diagram illustrating an exemplary wire tensioner.

### DETAILED DESCRIPTION

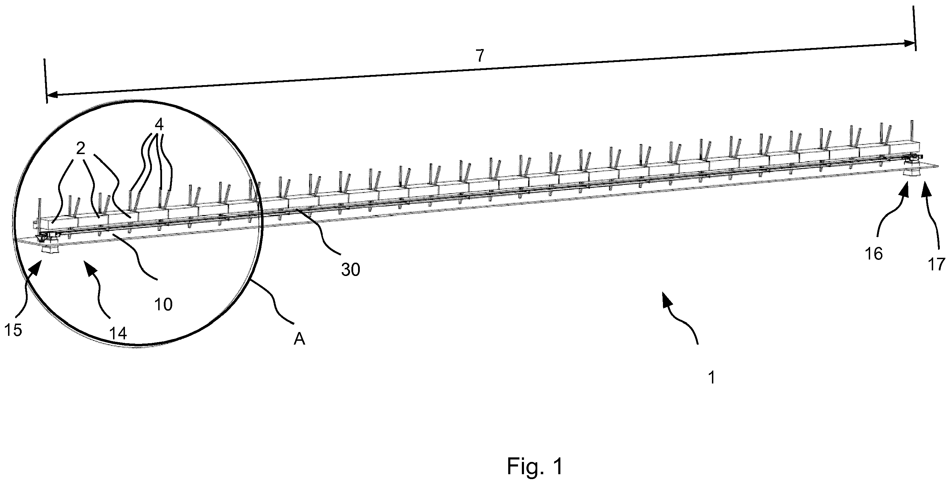

Fig. 1 is a schematic diagram illustrating an exemplary manure removal and discharging system 1. The system 1 comprises mink cages 2 arranged in a mink shed (not shown). The cages 2 are made of wire mesh with wire mesh bottoms, such that manure is dropped through the wire mesh bottom. For illustrative purposes, the cages 2 are illustrated without wire mesh walls. The cages 2 are arranged in longitudinally extending long rows 7 of wire mesh cages being suspended in posts 4 of the mink shed. Below the cages 2 is a conveyor belt 30. The belt conveyor comprises a first station 14 at the first system end 15 and a second station 16 at the opposite second system end 17 longitudinally spaced from the first station 14. The system 1 is suspended over the ground 10.

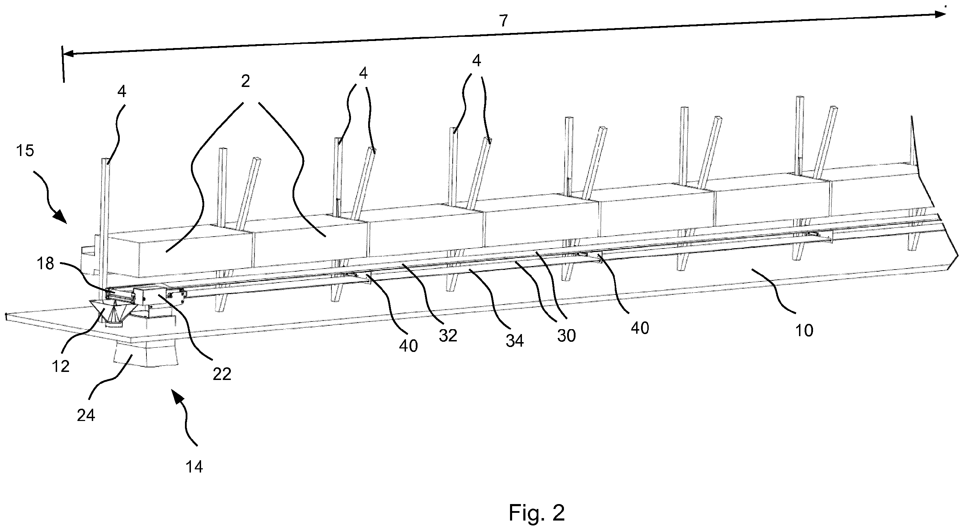

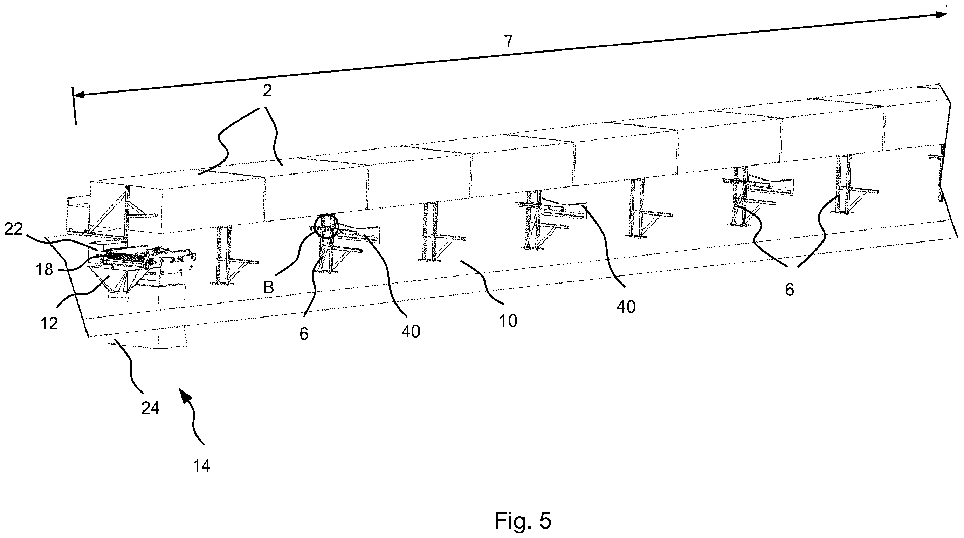

Fig. 2 is a schematic diagram illustrating an exemplary manure removal and discharging system seen as an enlarged view of the circle A in Fig. 1. The system 1 comprises mink cages 2 arranged in a mink shed (not shown). The cages 2 are arranged in longitudinally extending long rows 7 of wire mesh cages being suspended in posts 4 of the mink shed. Alternatively, the cages can be arranged in mink consoles (see Fig. 5). The system 1 comprises a belt conveyor comprising a first station 14 at the first system end 15 and a second station 16 (not shown) at the second end 17. The first station 14 comprises a first roller 18, and the second station 16 comprises a second roller 20 (not shown). The first roller 18 is a drive roller driven by a motor 22. Alternatively, or additionally, the second roller 20 is a drive roller driven by a motor 22. The first station 14 and the second station 16 are mounted in a concrete block 24 casted into the ground 10.

The system 1 comprises an endless conveyor belt 30 extending in a longitudinal direction below at least a portion of the bottoms of the cages 2 of the longitudinally extending row 7 of cages. The belt 30 extends around the first roller 18 and the second roller 20. The conveyor belt 30 has an upper belt portion 32 configured for receiving manure from the minks in the cages 2, and a lower conveyor belt portion 34. The system comprises a number of wires 80 (not shown) extending between the first station 14 and second station 16 below the upper belt portion 32 and being configured to support the upper belt portion 32. The longitudinal direction of which the wires 80 and belt 30 extend is substantially the same. The system comprises at least one bracket 40 extending transversely to the longitudinal direction of the belt 30 below the wires 80 (not shown). The brackets 40 are spaced evenly along the longitudinal direction of the belt 30, so that the belt 30 is supported in its entire length. The brackets 40 may be attached to every post 4 along the row 7 of cages or attached to every second or third post 4. The bracket 40 supports the belt 30 so that the upper belt portion 32 and the lower belt portion 34 do not hang unsupported. The first roller 18 drives the upper belt portion 32 in a direction from the second station 16 to the first station 14. A funnel 12 is located at the end of the belt 30 at the first station 14 to direct the manure received from the conveyor belt 30 into a drain.

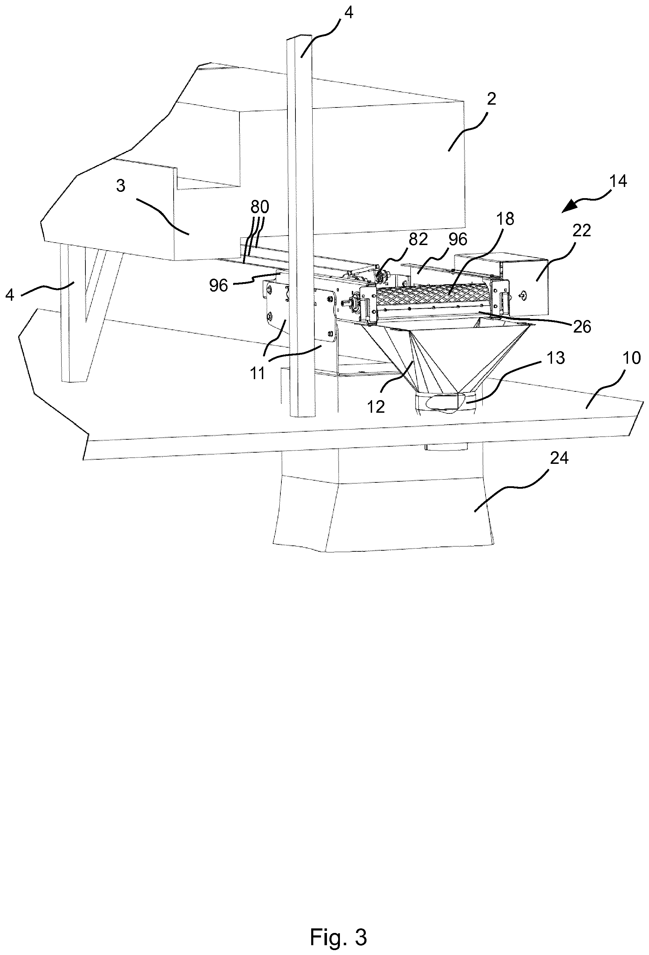

Fig. 3 is a schematic diagram illustrating an exemplary station of a manure removal and discharging system. The figure shows an enlarged view of the first station 14, such as the first station 14 in the previous figures. The system 1 comprises mink cages 2 being suspended in posts 4 of the mink shed. The mink cages 2 may comprise a nesting box 3 configured to accommodate mink pups. The first station 14 comprises a first roller 18. The first roller 18 is driven by a motor 22. The first roller 18 is attached to rails 96 on both ends of the roller 18. The main frame 11 of the first station 14 is mounted in a concrete block 24 casted into the ground 10. The system 1 comprises wires 80 extending between the first station 14 and second station 16 below the cages 2. The system may comprise at least two wires 80. The wires are wrapped around a center axle of a wire tensioner 82. A funnel 12 is located at the end of the belt 30 at the first station 14 to direct the manure scraped off the belt by the scraper 26 into a drain. The funnel 12 comprises a one-way valve 13 to allow manure to pass from above and restricts odour to pass from below. An exemplary one-way valve is disclosed in DK 179225 B1. The system may comprise a cleaning system for cleaning the lower belt portion. The cleaning system may be configured to clean the lower belt portion after the manure has been scraped off. For illustrative purposes the belt is not included in the figure, but the upper belt portion would be extending on top of the wires 80 from the first station 14 to the second station. The lower belt portion would be extending between the first station 14 and the second station 16 below the upper belt portion and the wires 80.

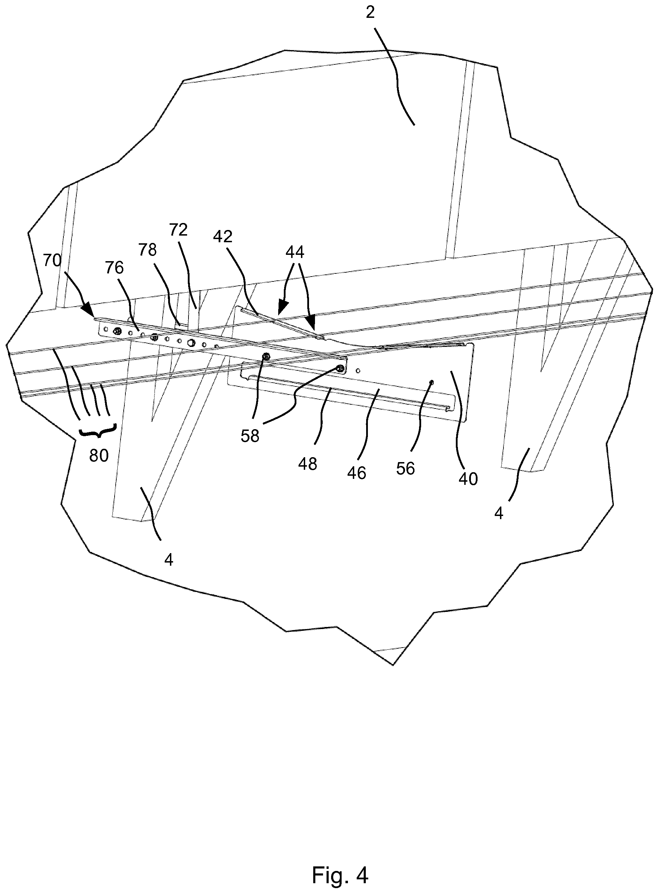

Fig. 4 is a schematic diagram illustrating an exemplary bracket 40 in a manure removal and discharging system, such as the bracket shown in the previous figures. The bracket 40 extends transversely in the longitudinal direction of the wires 80 below a number of wires 80. The system may comprise at least two wires 80, such as four wires 80 as illustrated in Fig. 4. The bracket has an upper surface 42 configured to support the wires 80 and the upper belt portion 32 (not shown). The upper surface 42 of the bracket 40 is provided with recesses 44 configured to receive respective wires 80. The upper surface 42 may comprise the number of recesses corresponding to the number of wires 80. In Fig. 4, the upper surface 42 comprises four recesses 44. The recesses 44 are arranged to support and guide the wires 80 so that the conveyor belt 30 is appropriately supported to accommodate the manure dropping down thereon.

The upper surface 42 of the bracket 40 has the shape of a flat U or V as seen in the longitudinal direction of the wires 80. Thereby, the belt 30 will also have the U- or V-shape as seen in a cross-sectional view and accommodate the manure dropping down thereon. The upper surface 42 of the bracket may alternatively have any other shape where the middle portion of the surface is lower than the right and/or left portion as seen in the longitudinal direction of the conveyor belt 30. Alternatively, the upper surface 42 may have a flat shape, i.e. the middle portion of the surface and the right and left portion are distributed on a horizontal line.

The bracket 40 comprises a through-going opening 46 defining a lower surface 48 configured to support the lower belt portion 34 (not shown) of the conveyor belt 30. The through-going opening 46 may be encircled by the bracket 40. Alternatively, the through-going opening 46 may provide an opening in one of the sides of the bracket 40, creating a C-shaped bracket. Alternatively, the bracket 40 may comprise an opening in the bottom.

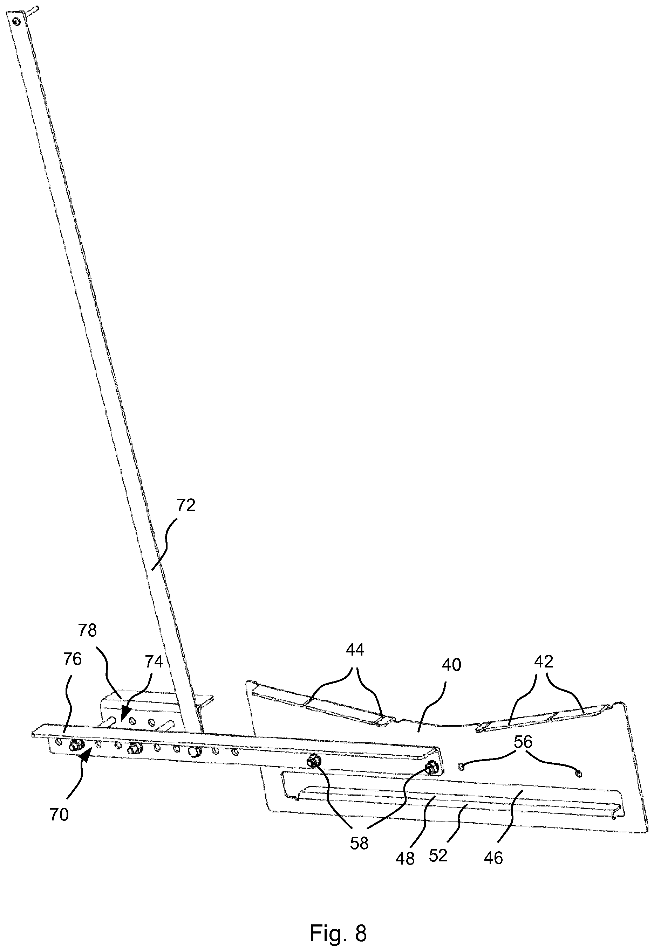

The bracket 40 comprises a first attachment element 70 configured to attach the bracket 40 to the post 4 of the mink shed. Alternatively, the first attachment element 70 may be configured to attach the bracket 40 to a leg of a console 6 (see Fig. 5). The first attachment element 70 comprises a first bar 76 and a second bar 78 (see Fig. 8 for more details). The first bar 76 and the second bar 78 are configured to clamp around the post 4 or the console leg 6. The first attachment element 70 may be detachably attached to the bracket 40. Alternatively, the first attachment element 70 may be fixed to the bracket 40, e.g. the first attachment element 70 may be soldered or welded to the bracket 40. Alternatively, the first attachment 70 element may be an integrated part of the console leg 6. The first attachment element 70 may be attached to the bracket 40 on either side of the bracket 40, rendering the bracket 40 adaptable to many situations.

The bracket 40 comprises a second attachment element 72 configured to attach to the first attachment element 70 to the post 4 of a mink shed. Alternatively, the second attachment element 72 may be configured to attach the first attachment element 70 to a console leg 6 (see Fig. 5). The second attachment element 72 may be detachably attached to the first attachment element 70. Alternatively, the second attachment element 72 may be fixed to the first attachment element 70, e.g. the second attachment element 72 may be soldered or welded to the first attachment element 70. Alternatively, the second attachment element 72 may be an integrated part of the console leg 6.

In Fig. 4., the bracket comprises holes 56 configured to receive bolts 58 to attach the first attachment element 70 to the bracket 40. The first attachment element 70 attaches to the second attachment element 72 in the same manner. The first attachment element 70 and the second attachment element 72 provides support to the bracket 40 and ensures that the bracket 40 does not rotate around the attachment point at the pole 4 or the console leg 6 due to the weight of the belt 30 or the wires 80.

The bracket 40 may be plate-shaped and formed from sheet material, such as metal or steel sheets or plastic sheets. Alternatively, the bracket 40 may be casted in metal or steel or moulded in a plastic material, such as a thermoplastic material.

Fig. 5 is a schematic diagram illustrating an exemplary manure removal and discharging system where the mink cages are arranged in consoles 6 instead of posts 4 of mink sheds, as in the previous figures. The system 1 comprises mink cages 2 arranged in longitudinally extending long rows 7 of wire mesh cages being suspended in mink consoles 6. The first station 14 comprises a first roller 18. The first roller 18 is driven by a motor 22. The first station 14 is mounted in a concrete block 24 casted into the ground 10. For illustrative purposes the conveyor belt 30 and the wires 80 are not shown in this figure. The system comprises at least one bracket 40 configured to support the wires which support the conveyor belt. A funnel 12 is located at the first station 14 to direct the manure into a drain.

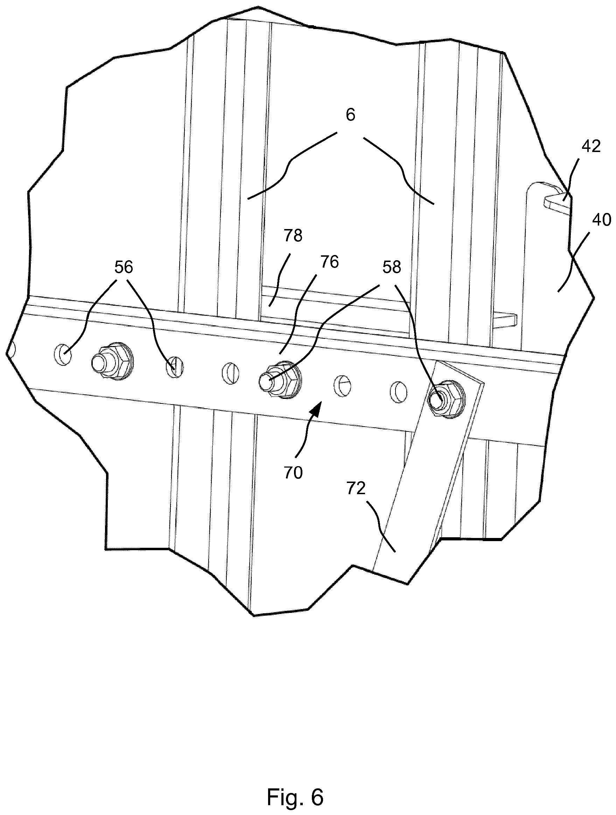

Fig. 6 is a schematic diagram illustrating an exemplary attachment element of a bracket 40, seen as an enlarged view of the circle B in Fig. 5. The figure shows part of the bracket 40 and the upper surface 42 of the bracket 40. The bracket 40 comprises a first attachment element 70. The first attachment element 70 comprises a first bar 76 and a second bar 78 and holes 56 configured to receive bolts 58 such that the first attachment element 70 may be attached to the mink consoles 6 by clamping the post 4 or console legs 6 between the bars 76, 78 of the first attachment element 70. The bracket 40 comprises a second attachment element 72 which is attached to the first attachment element 70 with bolts 58. The second attachment element 72 may extend in an upward direction and be attached to the post 4 or the console leg 6 above the bracket 40 or extend in a downward direction and be attached to the post 4 or the console leg 6 below the bracket 40.

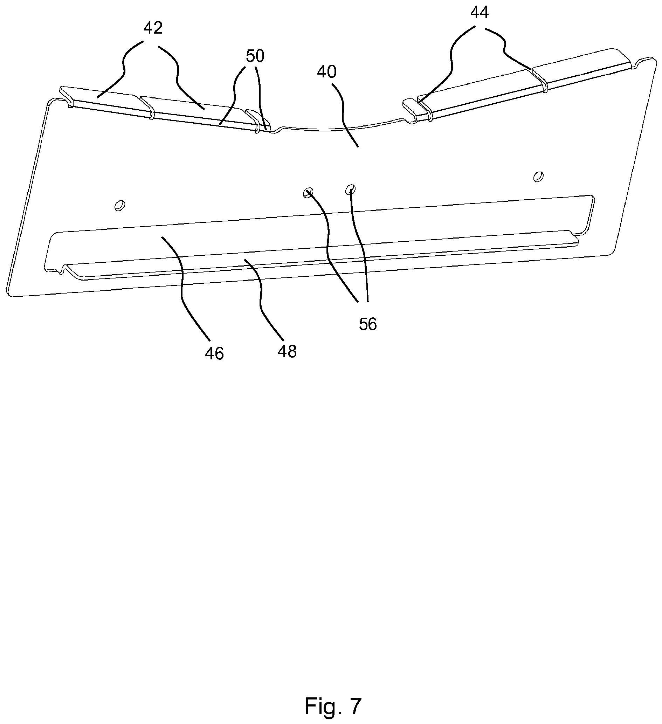

Fig. 7 is a schematic diagram illustrating an exemplary bracket 40, such as the bracket in the previous figures. The bracket 40 is seen from one side, such as the front, and comprises an upper surface 42 and recesses 44 configured to support the upper portion of the conveyor belt and the wires. The bracket 40 comprises a through-going opening 46 which defines the lower surface 48. The lower surface 48 is configured to support the lower portion of the conveyor belt. The bracket comprises holes 56 configured to receive bolts to attach the first attachment element to the bracket 40. The upper surface 42 comprises an upper inclination 50 configured to guide the belt smoothly past the bracket 40. The upper inclination 50 may incline upwardly in the moving direction of the upper belt portion 32. The upper inclination 50 may be a protrusion provided on the bracket 40. The protrusion may extend beyond the plate shape of the bracket 40. The protrusion may be bent of a sheet metal material or casted in a metal or steel material. Alternatively, the protrusion may be moulded in a plastic material.

Fig. 8 is a schematic diagram illustrating an exemplary bracket 40, such as the bracket in the previous figures. The bracket 40 is seen from the opposite side as that in Fig. 7, such as the back. The bracket 40 comprises an upper surface 42, recesses 44, a lower surface 48 defined by a through-going opening 46, and holes 56. The lower surface 48 comprises a lower inclination 52. The lower inclination 52 may incline upwardly in the moving direction of the lower belt portion 34 and is configured to guide the lower belt portion smoothly past the bracket 40. Alternatively or additionally, the direction of the upper inclination 50 and the direction of the lower inclination 52 are opposite. The lower inclination 52 may be a protrusion provided on the bracket 40. The protrusion may extend beyond the plate shape of the bracket 40. The protrusion may be bent of a sheet metal material or casted in a metal or steel material. Alternatively, the protrusion may be moulded in a plastic material.

The bracket 40 comprises a first attachment element 70 attached to the bracket 40 by means of bolts 58, and a second attachment element 72 attached to the first attachment element 70 by means of bolts 58. The first attachment element 70 comprises an attachment spacing 74 between the first bar 76 and the second bar 78 configured to receive and engage with the post of a mink shed or a mink console.

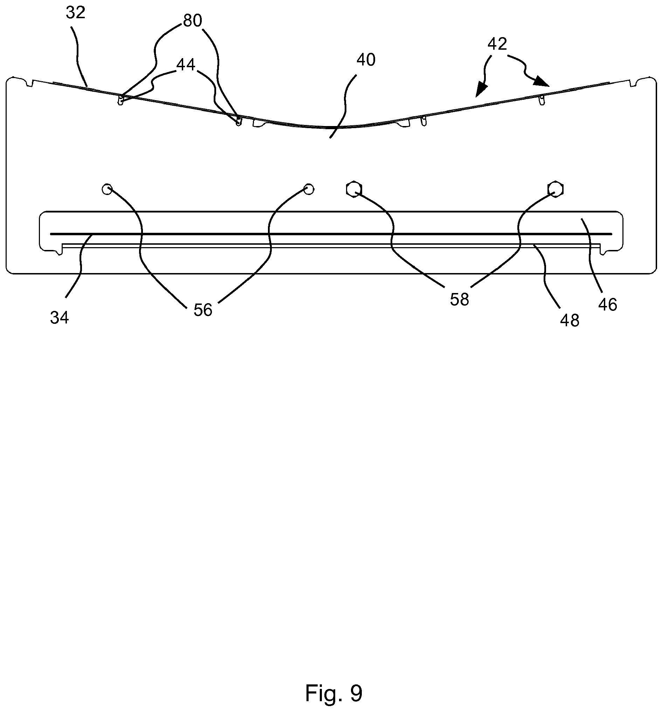

Fig. 9 is a schematic diagram illustrating an exemplary bracket 40, such as the bracket in the previous figures. The figure shows a bracket 40 comprising an upper surface 42, recesses 44, a through-going opening 46 defining a lower surface 48 and holes 56. The holes 56 are configured to receive bolts 58 to attach the first attachment element to the bracket 40. The recesses 44 are configured to support wires 80, and the upper surface 42 and the wires 80 are configured to support the upper belt portion 32. The through-going opening 46 is configured to receive the lower belt portion 34, and the lower surface 48 is configured to support the lower belt portion 34. The upper belt portion 32 has the shape as a flat U or V to accommodate the manure dropping down thereon.

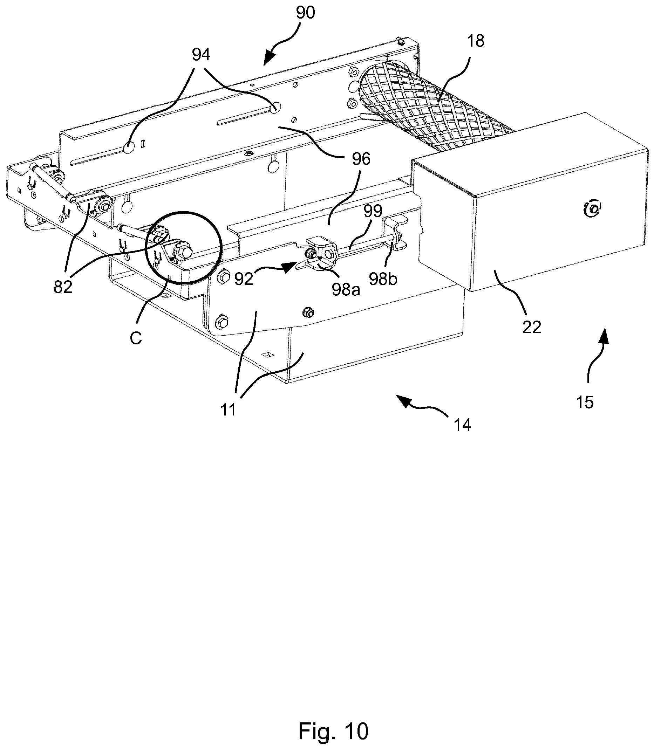

Fig. 10 is a schematic diagram illustrating an exemplary station of a manure removal and discharging system, such as the first station of the previous figures. The figure displays a first station 14 comprising a first roller 18 attached to rails 96 with a motor 22 and a main frame 11. The first station 14 comprises a belt tensioner 90 comprising a tensioning element 92 and tightening bolts 94. The tensioning element 92 comprises a first U-bracket 98a and a second U-bracket 98b connected to the first U-shaped bracket 98a by a tightening bolt 99. The first U-bracket 98a is attached to the rail 96 and the second U-bracket 98b is attached to the main frame 11. The U-brackets 98a, 98b may be attached by soldering or welding. The first U-bracket 98a may comprise internal threads. A nut may be located on the other side of the second U-bracket 98b to secure the tightening bolt 99. By tightening the tightening bolt 99 the distance between the two U-brackets 98a, 98b decreases and the rails 96 with the first roller 18 are moved towards the first end 15 and further from the second station 16 and the second end 17 (not shown) in the longitudinal direction, thereby tensioning the conveyor belt extending between and around the first roller 18 and the second roller 20 (not shown). The rails 96 are further secured by tightening the tightening bolts 94. The first station 14 comprises a plurality of wire tensioners 82 configured to tension the wires (see Fig. 10 for more details).

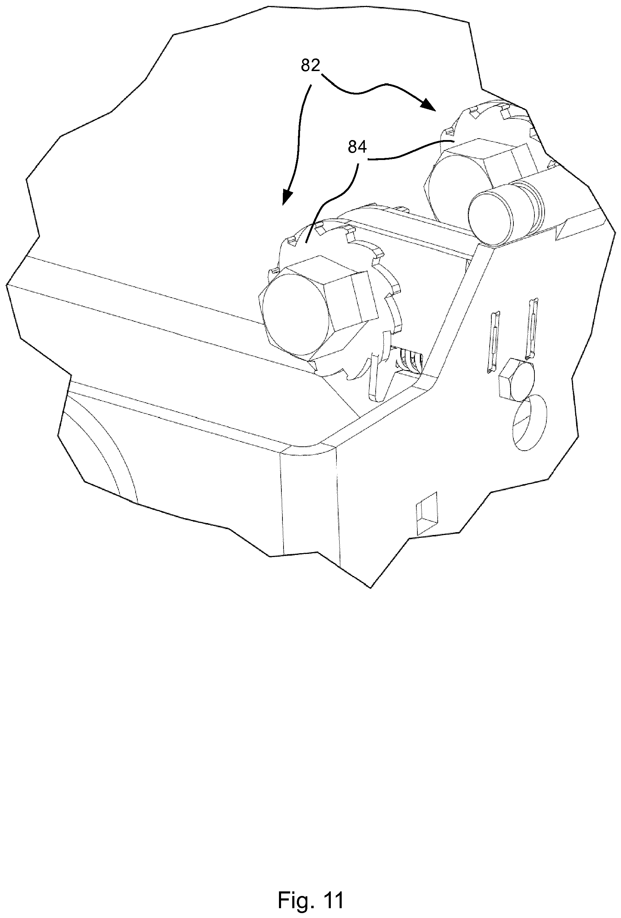

Fig. 11 is a schematic diagram illustrating an exemplary wire tensioner 82, such as the wire tensioner in the previous figures. The figure is seen as an enlarged view of the circle C in Fig. 10. The wires (not shown) are wrapped around a centre axle and tensioned by turning the racket wheel 84 of the racket. Alternatively, the wires could be tensioned by using a turnbuckle, also called a stretching or straining screw, instead of a racket. Other similar mechanisms may also be used. The wire tensioners 82 provide a way of tightening the wires easily, such that the upper belt portion is supported and does not hang unsupported.

### LIST OF REFERENCE NUMERALS

- 1: manure removal system
- 2: mink cage
- 3: nesting box
- 4: post
- 6: console leg
- 7: row of wire mesh cages
- 8: scraper
- 10: ground
- 11: main frame
- 12: funnel
- 13: one-way valve
- 14: first station
- 15: first system end
- 16: second station
- 17: second system end
- 18: first roller
- 20: second roller
- 22: motor
- 24: concrete block
- 26: scraper
- 30: conveyor belt
- 32: upper belt portion
- 34: lower belt portion
- 40: bracket
- 42: upper surface
- 44: recess
- 46: bracket opening
- 48: lower surface
- 50: upper inclination
- 52: lower inclination
- 54: protrusion
- 56: hole
- 58: bolt
- 60: upper belt direction
- 62: lower belt direction
- 70: first attachment element
- 72: second attachment element
- 74: attachment spacing
- 76: fist bar
- 78: second bar
- 80: wire
- 82: wire tensioner
- 84: racket wheel
- 90: belt tensioner
- 92: tensioning element
- 94: tightening bolt
- 96: rail
- 98a: first U-bracket
- 98b: second U-bracket
- 99: tightening bolt

## Claims

1. A manure removal and discharging system (1) for removal of manure from minks in mink cages (2) arranged in a mink shed, the cages being wire mesh cages having a wire mesh bottom and being arranged in longitudinally extending long rows of wire mesh cages (7) being suspended in posts (4) of the mink shed or arranged in cage consoles, wherein the system comprises
- a belt conveyor comprising a first station (14) located at a first system end (15) and a second station (16) located at an opposite second system end (17) longitudinally spaced from the first station, the first station (14) comprising a first roller (18), and the second station (16) comprising a second roller (20), at least one of the rollers being a drive roller,
- an endless conveyor belt (30) configured for extending in a longitudinal direction below at least a portion of the bottoms of the cages of the longitudinally extending row of cages (7) and around the first and second roller, the conveyor belt (30) having an upper belt portion (32) configured for receiving manure from the minks in the cages, and a lower conveyor belt portion (34), **characterized in**
- a number of wires (80) extending between the first and second station (14;18) below the upper belt portion (32) and being configured to support the upper belt portion,
- at least one bracket (40) extending transversely to the longitudinal direction of the belt below the wires (80) and having an upper surface (42) being configured to support the wires (80), and the upper surface (42) of the bracket (40) being provided with recesses (44) receiving respective wires (80).

2. System according to claim 1, wherein the upper surface (42) of the bracket (40) has the shape of a flat U or V as seen in the longitudinal direction of the conveyor belt (30).

3. System according to any of the preceding claims, wherein the bracket (40) comprises a through-going opening (46) defining a lower surface (50) configured to support the lower belt portion (34) of the conveyor belt.

4. System according to any of the preceding claims, wherein the upper surface (42) of the bracket (40) comprises an upper inclination (50), wherein the upper inclination (50) inclines upwardly in the moving direction of the upper belt portion (32), and wherein the lower surface (48) of the bracket (40) comprises a lower inclination (52), wherein the lower inclination (52) inclines upwardly in the moving direction of the lower belt portion (34).

5. System according to claim 4, wherein the inclination of the upper surface (42) and/or lower surface (48) is a protrusion (54) provided on the bracket (40).

6. System according to any of the preceding claims, wherein the bracket (40) comprises a first attachment element configured to attach the bracket (40) to the post (4) or the console.

7. System according to any of the preceding claims, wherein the first station (14) and/or the second station (16) comprise a wire tensioner (82).

## Patentansprüche

1. Dungentfernungs- und Ausstoßsystem (1) zum Entfernen von Dung von Nerzen in Nerzkäfigen (2), die in einem Nerzstall eingerichtet sind, wobei die Käfige Maschendrahtkäfige sind, einen Maschendrahtboden aufweisen und in sich längs erstreckenden Längsreihen von Maschendrahtkäfigen (7) eingerichtet sind, die von Pfosten (4) des Nerzstalls abhängen oder in Käfigregalen eingerichtet sind, wobei das System umfasst
- einen Bandförderer, der eine erste Station (14), die bei einem ersten Systemende (15) liegt, und eine zweite Station (16), die bei einem gegenüberliegenden zweiten Systemende (17) liegt, das längs von der ersten Station beabstandet ist, umfasst, wobei die erste Station (14) eine erste Walze (18) umfasst und die zweite Station (16) eine zweite Walze (20) umfasst, wobei mindestens eine der Walzen eine Antriebswalze ist,
- ein Endlosförderband (30), das dazu ausgebildet ist, sich in einer Längsrichtung unter mindestens einem Abschnitt der Böden der Käfige der sich längs erstreckenden Reihe von Käfigen (7) und um die erste und zweite Walze zu erstrecken, wobei das Förderband (30) einen oberen Bandabschnitt (32), der dazu ausgebildet ist, Dung von den Nerzen in den Käfigen aufzunehmen, und einen unteren Förderbandabschnitt (34) aufweist, **gekennzeichnet durch**
- eine Zahl von Drähten (80), die sich zwischen der ersten und zweiten Station (14; 18) unter dem oberen Bandabschnitt (32) erstrecken und dazu ausgebildet sind, den oberen Bandabschnitt zu stützen,
- mindestens eine Klammer (40), die sich quer zu der Längsrichtung des Bands unter den Drähten (80) erstreckt und eine obere Oberfläche (42) aufweist, die dazu ausgebildet ist, die Drähte (80) zu stützen, und wobei die obere Oberfläche (42) der Klammer (40) mit Vertiefungen (44) bereitgestellt ist, die jeweilige Drähte (80) aufnehmen.

2. System nach Anspruch 1, wobei die obere Oberfläche (42) der Klammer (40) die Form eines flachen U oder V aufweist, in der Längsrichtung des Förderbands (30) gesehen.

3. System nach einem der vorstehenden Ansprüche, wobei die Klammer (40) eine Durchlassöffnung (46) umfasst, die eine untere Oberfläche (50) definiert, die dazu ausgebildet ist, den unteren Bandabschnitt (34) des Förderbands zu stützen.

4. System nach einem der vorstehenden Ansprüche, wobei die obere Oberfläche (42) der Klammer (40) eine obere Neigung (50) umfasst, wobei sich die obere Neigung (50) in der Bewegungsrichtung des oberen Bandabschnitts (32) nach oben neigt und wobei die die untere Oberfläche (48) der Klammer (40) eine untere Neigung (52) umfasst, wobei sich die untere Neigung (52) in der Bewegungsrichtung des unteren Bandabschnitts (34) nach oben neigt.

5. System nach Anspruch 4, wobei die Neigung der oberen Oberfläche (42) und/oder unteren Oberfläche (48) ein Fortsatz (54) ist, der an der Klammer (40) bereitgestellt ist.

6. System nach einem der vorstehenden Ansprüche, wobei die Klammer (40) ein erstes Befestigungselement umfasst, das dazu ausgebildet ist, die Klammer (40) an dem Pfosten (4) oder dem Regal zu befestigen.

7. System nach einem der vorstehenden Ansprüche, wobei die erste Station (14) und/oder die zweite Station (16) einen Drahtspanner (82) umfassen.

## Revendications

1. Système d'enlèvement et de décharge de fumier (1) pour l'enlèvement de fumier de visons dans des cages pour vison (2) agencées dans un abri pour visons, les cages étant des cages en treillis métallique présentant un fond en treillis métallique et étant agencées en longues rangées s'étendant longitudinalement de cages en treillis métallique (7) étant suspendues en poteaux (4) de l'abri pour visons ou agencées en consoles de cages, dans lequel le système comprend
- un convoyeur à bande comprenant une première station (14) située au niveau d'une première extrémité de système (15) et une seconde station (16) située au niveau d'une seconde extrémité de système opposée (17) espacée longitudinalement de la première station, la première station (14) comprenant un premier rouleau (18), et la seconde station (16) comprenant un second rouleau (20), au moins l'un des rouleaux étant un rouleau d'entraînement,
- une bande de convoyeur sans fin (30) configurée pour s'étendre dans une direction longitudinale en dessous d'au moins une portion des fonds des cages de la rangée de cages s'étendant longitudinalement (7) et autour des premier et second rouleaux, la bande de convoyeur (30) présentant une portion de bande supérieure (32) configurée pour recevoir du fumier des visons dans les cages, et une portion de bande de convoyeur inférieure (34), **caractérisé par**
- un nombre de câbles (80) s'étendant entre les première et seconde stations (14; 18) en dessous de la portion de bande supérieure (32) et étant configurés pour soutenir la portion de bande supérieure,
- au moins une équerre de fixation (40) s'étendant transversalement à la direction longitudinale de la bande en dessous des câbles (80) et présentant une surface supérieure (42) étant configurée pour soutenir les câbles (80), et la surface supérieure (42) de l'équerre de fixation (40) étant pourvue d'évidements (44) recevant des câbles (80) respectifs.

2. Système selon la revendication 1, dans lequel la surface supérieure (42) de l'équerre de fixation (40) présente la forme d'un U ou V plat telle que vue dans la direction longitudinale de la bande de convoyeur (30).

3. Système selon l'une quelconque des revendications précédentes, dans lequel l'équerre de fixation (40) comprend une ouverture traversante (46) définissant une surface inférieure (50) configurée pour soutenir la portion de bande inférieure (34) de la bande de convoyeur.

4. Système selon l'une quelconque des revendications précédentes, dans lequel la surface supérieure (42) de l'équerre de fixation (40) comprend une inclinaison supérieure (50), dans lequel l'inclinaison supérieure (50) s'incline vers le haut dans la direction de déplacement de la portion de bande supérieure (32), et dans lequel la surface inférieure (48) de l'équerre de fixation (40) comprend une inclinaison inférieure (52), dans lequel l'inclinaison inférieure (52) s'incline vers le haut dans la direction de déplacement de la portion de bande inférieure (34).

5. Système selon la revendication 4, dans lequel l'inclinaison de la surface supérieure (42) et/ou surface inférieure (48) est une saillie (54) fournie sur l'équerre de fixation (40).

6. Système selon l'une quelconque des revendications précédentes, dans lequel l'équerre de fixation (40) comprend un premier élément d'attache configuré pour attacher l'équerre de fixation (40) au poteau (4) ou à la console.

7. Système selon l'une quelconque des revendications précédentes, dans lequel la première station (14) et/ou la seconde station (16) comprend un tendeur de câble (82).
